(19) Europäisches Patentamt
European Patent Office
Office européen des brevets

(11) **EP 1 927 777 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(51) Int Cl.:
**F16D 48/06** *(2006.01)*

(21) Anmeldenummer: **08002630.5**

(22) Anmeldetag: **23.03.2005**

(54) **Hydraulische Betätigungsvorrichtung für eine Kraftfahrzeug-Reibkupplung**

Hydraulic operation device for a motor vehicle friction coupling

Dispositif d'actionnement hydraulique pour l'embrayage à friction d'un véhicule automobile

(84) Benannte Vertragsstaaten:
**DE FR IT**

(30) Priorität: **24.03.2004 DE 102004015185**

(43) Veröffentlichungstag der Anmeldung:
**04.06.2008 Patentblatt 2008/23**

(62) Dokumentnummer(n) der früheren Anmeldung(en) nach Art. 76 EPÜ:
**05730297.8 / 1 728 000**

(73) Patentinhaber: **FTE automotive GmbH**
**96106 Ebern (DE)**

(72) Erfinder:
• **Porzel, Rainer**
  **96106 Ebern (DE)**
• **Kadlac, Otto**
  **96052 Bamberg (DE)**
• **Oberlack, Norbert**
  **91315 Höchstadt (DE)**
• **Peuker, Karl**
  **96106 Ebern (DE)**
• **Zsari, Geza**
  **96106 Ebern (DE)**

(74) Vertreter: **Oppermann, Mark**
**Oppermann & Oppermann**
**Patentanwälte**
**Am Wiesengrund 35**
**63075 Offenbach (DE)**

(56) Entgegenhaltungen:
**DE-A1- 10 316 433**

EP 1 927 777 B1

**Beschreibung**

TECHNISCHES GEBIET

Die Erfindung bezieht sich auf eine hydraulische Betätigungsvorrichtung für eine Kraftfahrzeug-Reibkupplung, wie sie massenweise in der Automobilindustrie zum Einsatz kommen.

STAND DER TECHNIK

Eine herkömmliche hydraulische Betätigungsvorrichtung für eine Kraftfahrzeug-Reibkupplung, wie sie etwa im "Handbuch der hydraulischen Bremsanlage und Kupplungsbetätigung" der Anmelderin, 1. Auflage 1998, auf Seite 261 gezeigt ist, hat einen an einen mit Hydraulikflüssigkeit gefüllten Ausgleichsbehälter angeschlossenen Geberzylinder, dessen Geberkolben über ein Betätigungsorgan in Form eines Kupplungspedals kraftbeaufschlagt und verschoben werden kann. Der Geberzylinder ist über eine Druckleitung mit einem Nehmerzylinder hydraulisch verbunden, bei dem es sich um einen "klassischen" Nehmerzylinder mit einem zylindrischen Kolben oder aber um einen sogenannten "Zentralausrücker" mit einem konzentrisch bezüglich der Getriebeeingangswelle angeordneten Ringkolben handeln kann. Wird das Kupplungspedal niedergetreten, so wird der im Geberzylinder erzeugte Druck über die Flüssigkeitssäule in der Druckleitung auf den Nehmerzylinder übertragen. Im Ergebnis wird ein Ausrückorgan der Kupplung - im Falle des klassischen Nehmerzylinders der mit dem Ausrücklager der Kupplung wirkverbundene Ausrückhebel bzw. im Falle des Zentralausrückers das Ausrücklager - über den Nehmerzylinderkolben mit einer Betätigungskraft beaufschlagt, um über einen Ausrückmechanismus die Kupplungsdruckplatte von der Kupplungsmitnehmerscheibe und somit den Motor vom Getriebe des Kraftfahrzeugs zu trennen.

In letzter Zeit zeichnet sich zunehmend ein Trend ab, Kraftfahrzeuge stärker zu motorisieren. Infolgedessen haben moderne Kraftfahrzeug-Reibkupplungen nicht selten Drehmomente von über 300 Nm zu übertragen. Um derartig stark dimensionierte Kupplungen auszurücken, sind im Verhältnis hohe Betätigungskräfte aufzubringen. Wird hierzu eine konventionelle hydraulische Betätigungsvorrichtung eingesetzt, führt dies zu einem hohen Kraftbedarf am Kupplungspedal. Derartig hohe zum Ausrücken der Kupplung benötigte Pedalkräfte sind insbesondere bei Personenkraftwagen jedoch unerwünscht.

Zwar sind im Stand der Technik auch hydraulische Betätigungsvorrichtungen für Kraftfahrzeug-Reibkupplungen bekannt geworden, bei denen der Geberkolben des Geberzylinders stets (z.B. US 4,918,921) bzw. wahlweise (z.B. US 5,002,166) über ein mittels eines Elektromotors antreibbares Getriebe kraftbeaufschlagbar und verschiebbar ist. Im Falle eines solchen Servobetriebs dieser Betätigungsvorrichtungen erfährt die Bedienperson jedoch keine für den jeweiligen Ausrückzustand der Reibkupplung repräsentative Rückmeldung am Kupplungspedal.

Ein dem vorstehend genannten Stand der Technik ähnlicher, elektromotorisch betätigbarer Geberzylinder für eine hydraulische Kupplungsbetätigungsvorrichtung ist schließlich der US 5,094,079 zu entnehmen. Die hier offenbarte Geberzylinderbaugruppe benötigt allerdings u.a. einen erheblichen Bauraum, der in modernen Kraftfahrzeugen am Pedalbock für das Kupplungspedal nicht immer verfügbar ist.

Der Erfindung liegt die Aufgabe zugrunde, eine möglichst einfach und kompakt aufgebaute hydraulische Betätigungsvorrichtung für eine Kraftfahrzeug-Reibkupplung zu schaffen, mittels der auch Kupplungen betätigt werden können, die im Verhältnis hohe Drehmomente übertragen, ohne daß hierfür im Vergleich zu der herkömmlichen hydraulischen Betätigungsvorrichtung größere Pedalkräfte bzw. -wege erforderlich sind.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 5 und werden nachfolgend in der detaillierten Beschreibung des Ausführungsbeispiels noch näher beschrieben werden.

DARSTELLUNG DER ERFINDUNG

Gemäß der Erfindung umfaßt eine hydraulische Betätigungsvorrichtung für eine Kraftfahrzeug-Reibkupplung

einen Geberzylinder, dessen Geberkolben über ein Betätigungsorgan als Gebergrößen mit einer Geberkraft beaufschlagbar und um einen Geberweg verschiebbar ist,
einen Nehmerzylinder, der einen mit dem Geberkolben über eine Flüssigkeitssäule hydraulisch in Reihe geschalteten Nehmerkolben aufweist, welcher mit einem Ausrückorgan der Kraftfahrzeug-Reibkupplung wirkverbunden ist, wobei der Geberzylinder mit dem Nehmerzylinder mittels einer ersten Druckleitung hydraulisch verbunden ist, in der die Flüssigkeitssäule zwischen dem Geberkolben und dem Nehmerkolben verschiebbar ist,
eine Stelleinheit, die einen zu dem Geberkolben hydraulisch parallel geschalteten Stellkolben hat, welcher über ein mittels eines Elektromotors antreibbares Getriebe kraftbeaufschlagbar und verschiebbar ist, wobei die Stelleinheit zur Parallelschaltung von Geberkolben und Stellkolben über eine zweite Druckleitung hydraulisch an die erste Druckleitung angeschlossen ist,

eine Steuereinheit, mittels der der Elektromotor ansteuerbar ist, so daß durch Verschiebung des Stellkolbens über das Getriebe das Volumen der Flüssigkeitssäule zwischen dem Geberkolben und dem Nehmerkolben definiert vergrößerbar ist,

eine mit der Steuereinheit signalverbundene erste Sensoreinrichtung, mittels der der Geberweg als Führungsgröße erfaßbar ist, und

eine mit der Steuereinheit signalverbundene zweite Sensoreinrichtung, mittels der ein Stellweg des Stellkolbens oder ein Nehmerweg des Nehmerkolbens als Regelgröße erfaßbar ist,

wobei die Steuereinheit ein Rechenglied aufweist, mittels dessen ein Soll-Wert für den Stellweg $(S_{Ssoll})$ bzw. den Nehmerweg $(S_{Nsoll})$ nach folgender Beziehung ermittelbar ist:

$$S_{Ssoll} = k_U * s_{Gist} \text{ bzw. } S_{Nsoll} = k_U * s_{Gist}$$

mit

$S_{Gist}$:  dem vermittels der ersten Sensoreinrichtung erfaßten Geberweg des Geberkolbens und

$k_U$:  einem in einem Speicherglied der Steuereinheit abgelegten Übersetzungsfaktor, und

wobei der ermittelte Stellweg $(S_{Ssoll})$ oder Nehmerweg $(S_{Nsoll})$ über den von der Steuereinheit angesteuerten Elektromotor der Stelleinheit einregelbar ist.

Hierbei kann der Übersetzungsfaktor $(k_U)$ konstant sein.

Auch kann vorgesehen sein, daß der Geberkolben mittels einer Rückstellfeder in eine Grundstellung vorgespannt ist, in der der Druckraum des Geberzylinders mit einem Vorratsbehälter hydraulisch verbunden ist.

Bei dem Getriebe der Stelleinheit kann es sich um einen Spindeltrieb handeln; bei dem Elektromotor der Stelleinheit handelt es sich bevorzugt um einen bürstenlosen Gleichstrommotor.

Bei der Parallelschaltung von Geberkolben und Stellkolben ermöglicht die Stelleinheit eine definierte Vergrößerung des Volumens der Flüssigkeitssäule zwischen Geberkolben und Nehmerkolben, bei - verglichen mit herkömmlichen Betätigungsvorrichtungen - im wesentlichen gleichen Druckniveau in der Flüssigkeitssäule. Infolgedessen kann unter Beibehaltung eines herkömmlichen, kompakten Geberzylinders und somit ohne Veränderung der am Geberzylinder über das Kupplungspedal von der Bedienperson aufzubringenden Kräfte ein Nehmerzylinder zum Einsatz kommen, dessen Nehmerkolben eine gegenüber herkömmlichen Nehmerzylindern größere hydraulische Wirkfläche aufweist, so daß über den Nehmerzylinder eine höhere Kraft an der Kupplung aufgebracht werden kann und somit ohne Probleme Kupplungen ausgerückt werden können, die im Verhältnis hohe Drehmomente zu übertragen haben.

Bei der erfindungsgemäßen Schaltung kann die räumliche Lage der Stelleinheit in vorteilhafter Weise unabhängig von der Lage sowohl des Geberzylinders als auch des Nehmerzylinders gewählt werden, wodurch eine große Flexibilität hinsichtlich der Möglichkeiten der Anordnung der Stelleinheit gegeben ist. Dies ist insbesondere bei modernen Personenkraftwagen von Vorteil, welche in der Regel eine Vielzahl von Aggregaten aufweisen, die im Motorraum unterzubringen sind.

Da des weiteren der Elektromotor der Stelleinheit zur Kraftbeaufschlagung bzw. Verschiebung des Stellkolbens über das Getriebe vermittels der Steuereinheit in Abhängigkeit von einer der Gebergrößen, sprich dem Geberweg ansteuerbar ist, kann stets gewährleistet werden, daß die Stelleinheit bei der Kupplungsbetätigung gerade ein solches Volumen beisteuert, das bewirkt, daß sich die entsprechende Gebergröße für die Bedienperson vom Pedalgefühl her nicht von der entsprechenden Gebergröße bei der Betätigung einer herkömmlichen hydraulischen Betätigungsvorrichtung unterscheidet, obwohl eine Kupplung ausgerückt wird, die höhere Drehmomente überträgt und dementsprechend höhere Ausrückkräfte erfordert.

Nicht zuletzt ergeben sich Vorteile daraus, daß erfindungsgemäß ein direkter mechanischer Angriff eines Stellmotors am Geberkolben, wie er z.B. aus der eingangs zitierten US 5,094,079 bekannt ist, gerade vermieden wird. Zum einen kann somit bei der erfindungsgemäßen Betätigungsvorrichtung nämlich ein Geberzylinder eingesetzt werden, der keinen übermäßig großen Bauraum am Pedalbock für das Kupplungspedal beansprucht. Zum anderen sorgt die hydraulische Verbindung zwischen Stelleinheit und Geberzylinder für ein - verglichen mit dem obigen Stand der Technik - weniger steifes System bzw. eine bestimmte "Weichheit" im System, aufgrund der es zu einer gewissen Verzögerung des Druckaufbaus kommen und die ggf. im Hinblick auf eine Schwingungsoptimierung des hydraulischen Betätigungssystems genutzt werden kann.

KURZE BESCHREIBUNG DER ZEICHNUNGEN

Im folgenden wird die Erfindung anhand eines bevorzugten Ausführungsbeispiels unter Bezugnahme auf die beigefügten schematischen Zeichnungen näher erläutert, wobei gleiche oder entsprechende Teile mit den gleichen Bezugszeichen versehen sind. In den Zeichnungen zeigen:

Fig. 1    ein Schaltbild einer erfindungsgemäßen hydraulischen Betätigungsvorrichtung für eine Kraftfahrzeug-Reibkupplung nach einem Ausführungsbeispiel, bei dem ein Geberkolben eines Geberzylinders mit einem Stellkolben einer elektromechanischen Stelleinheit bezüglich eines Nehmerkolbens eines Nehmerzylinders hydraulisch parallel geschaltet ist,

Fig. 2    ein zur Erläuterung des Ausführungsbeispiels dienendes erstes Diagramm, in dem der Stellweg $S_s$ des Stellkolbens in der Stelleinheit als Funktion des Geberwegs $S_G$ des Geberkolbens im Geberzylinder aufgetragen ist,

Fig. 3    ein zur Erläuterung des Ausführungsbeispiels dienendes zweites Diagramm, in dem die Volumenaufnahme $\Delta V_N$ des Nehmerzylinders als Funktion des Stellwegs $s_s$ des Stellkolbens in der Stelleinheit bzw. des Geberwegs $s_G$ des Geberkolbens aufgetragen ist, und

Fig. 4    ein zur Erläuterung des Ausführungsbeispiels dienendes drittes Diagramm, in dem der im Nehmerzylinder herrschende Nehmerdruck $p_N$ als Funktion der Volumenaufnahme $\Delta V_N$ des Nehmerzylinders aufgetragen ist.

DETAILLIERTE BESCHREIBUNG DES AUSFÜHRUNGSBEISPIELS

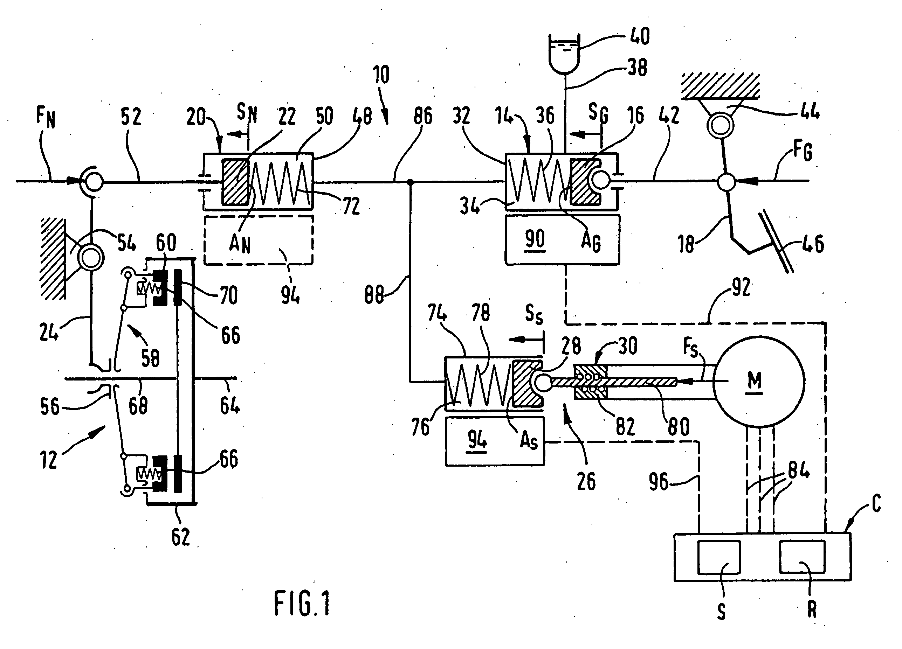

Die Fig. 1 zeigt eine hydraulische Betätigungsvorrichtung 10 für eine Kraftfahrzeug-Trockenreibkupplung - nachfolgend kurz Kupplung 12 genannt - in ihrer Grundstellung, d.h. dem unbetätigten Zustand, in dem die Kupplung 12 eingerückt ist. Diese Betätigungsvorrichtung 10 umfaßt in an sich bekannter Weise einen Geberzylinder 14 mit einem Geberkolben 16, der über ein Betätigungsorgan - im dargestellten Ausführungsbeispiel ein Kupplungspedal 18 - als Gebergrößen mit einer Geberkraft F$_G$ beaufschlagt und um einen Geberweg $S_G$ verschoben werden kann, und einen Nehmerzylinder 20, der einen mit dem Geberkolben 16 über eine Flüssigkeitssäule hydraulisch in Reihe geschalteten Nehmerkolben 22 aufweist, welcher mit einem Ausrückorgan - in dem dargestellten Ausführungsbeispiel ein Ausrückhebel 24 - der Kupplung 12 wirkverbunden ist. Die Betätigungsvorrichtung 10 weist gemäß Fig. 1 des weiteren eine elektromechanische Stelleinheit 26 mit einem Stellkolben 28 auf, der über ein mittels eines Elektromotors M antreibbares Getriebe 30 mit einer Stellkraft $F_s$ beaufschlagt und um einen Stellweg $S_s$ verschoben werden kann. Der Stellkolben 28 ist bezüglich des Nehmerkolbens 22 hydraulisch parallel zum Geberkolben 16 geschaltet. Schließlich hat die Betätigungsvorrichtung 10 eine Steuereinheit C, mittels der der Elektromotor M der Stelleinheit 26 in Abhängigkeit von der Gebergröße $S_G$ oder einer dazu im wesentlichen proportionalen Größe derart ansteuerbar ist, daß, wie nachfolgend noch ausführlich erläutert werden wird, bei Parallelschaltung von Geberkolben 16 und Stellkolben 28 durch Verschiebung des Stellkolbens 28 über das Getriebe 30 das Volumen der Flüssigkeitssäule zwischen Geberkolben 16 und Nehmerkolben 22 definiert vergrößert werden kann.

Der Geberzylinder 14 weist in an sich bekannter Weise ein Zylindergehäuse 32 auf, in dem der Geberkolben 16 längsverschieblich und gegenüber der Innenumfangsfläche des Zylindergehäuses 32 mittels hier nicht dargestellter Dichtmittel abgedichtet geführt ist, wobei der Geberkolben 16 im Zylindergehäuse 32 einen Druckraum 34 druckdicht und variabel begrenzt. Im Druckraum 34 ist eine Rückstellfeder 36 - im dargestellten Ausführungsbeispiel in der Form einer Schraubendruckfeder - angeordnet, mittels der der Geberkolben 16 in seine in Fig. 1 dargestellte Grundstellung vorgespannt ist, in der der Druckraum 34 über eine Nachlaufleitung 38 mit einem Vorratsbehälter 40 für die Hydraulikflüssigkeit hydraulisch verbunden ist, so daß in der Grundstellung des Geberkolbens 16 u.a. etwaige Verluste an Hydraulikflüssigkeit im hydraulischen System ausgeglichen werden und auch eine Entlüftung desselben über den Vorratsbehälter 40 erfolgen kann.

Auf der vom Druckraum 34 abgewandten Seite des Geberkolbens 16 ist eine Kolbenstange 42 vorgesehen, die mit ihrem einen Ende am Geberkolben 16 angreift und mit ihrem anderen Ende am Kupplungspedal 18 angelenkt ist. Das Kupplungspedal 18 selbst ist in an sich bekannter Weise mit seinem einen Ende an einem in Fig. 1 lediglich schematisch angedeuteten Pedalbock 44 des Kraftfahrzeugs verschwenkbar gelagert und weist an seinem anderen Ende eine Druckplatte 46 auf, über die die Bedienperson Betätigungskräfte am Kupplungspedal 18 aufbringen kann. Es ist ersichtlich, daß die Bedienperson durch Aufbringung von Betätigungskräften an der Druckplatte 46 des Kupplungspedals 18 - üblicherweise das Niedertreten des Kupplungspedals 18 - mit einer durch die Geometrie und die Abmessungen des Kupplungspedals 18 sowie die räumliche Lage der Gelenkpunkte zwischen Kupplungspedal 18 und Pedalbock 44 bzw. Kolbenstange 42 definierten Hebelübersetzung über die Kolbenstange 42 eine bestimmte Geberkraft $F_G$ am Geberkolben 16 erzeugen und diesen um einen bestimmten Geberweg $S_G$ verschieben kann.

Bei dem Nehmerzylinder 20 handelt es sich im dargestellten Ausführungsbeispiel um eine "klassische" Kolben-Zylinder-Anordnung - im Gegensatz zu einem sogenannten "Zentralausrücker", wie er z.B. in der DE 102 22 730 A1 der Anmelderin beschrieben wird, und der hier alternativ zum Einsatz kommen könnte - mit einem Zylindergehäuse 48, in dem der Nehmerkolben 22 längsverschieblich und gegenüber der Innenumfangsfläche des Zylindergehäuses 48 mittels hier nicht gezeigter Dichtmittel abgedichtet geführt ist, um im Zylindergehäuse 48 einen Druckraum 50 druckdicht und variabel zu begrenzen. Auf der vom Druckraum 50 abgewandten Seite des Nehmerkolbens 22 ist eine Druckstange 52 am Nehmerkolben 22 befestigt, die mit ihrem vom Nehmerkolben 22 abgewandten Ende an dem in Fig. 1 oberen Ende des Ausrückhebels 24 angreift.

Der Ausrückhebel 24 selbst ist in an sich bekannter Weise verschwenkbar an einem in Fig. 1 lediglich schematisch angedeuteten Umlenkbock 54 gelagert und greift mit seinem in dieser Figur unteren Ende an einem ebenfalls nur schematisch gezeichneten Ausrücklager 56 der Kupplung 12 an. Das Ausrücklager 56 ist über einen ebenfalls an sich bekannten Ausrückmechanismus 58 mit einer axial beweglichen Druckplatte 60 wirkverbunden, die zusammen mit dem Ausrückmechanismus 58 an einem Schwungrad 62 befestigt ist, welches seinerseits drehfest an einer Kurbelwelle 64 einer Verbrennungskraftmaschine (nicht dargestellt) angebracht ist. Der Ausrückmechanismus 58 weist des weiteren Anpreßfedern 66 - die eigentlichen Kupplungsfedern - auf, die im Ruhezustand der Kupplung 12 die Druckplatte 60 gegen eine in an sich bekannter Weise Reibbeläge tragende und drehfest an einer Getriebeeingangswelle 68 angebrachte Mitnehmer- oder Kupplungsscheibe 70 pressen und somit letztere gegen das Schwungrad 62 drücken, so daß im eingerückten Zustand der Kupplung 12 ein Reibschluß zwischen Schwungrad 62, Kupplungsscheibe 70 und Druckplatte 60 besteht, der für eine Drehmomentübertragung von der Kurbelwelle 64 auf die Getriebeeingangswelle 68 sorgt.

Der Nehmerzylinder 20 hat ferner eine im Druckraum 50 angeordnete Vorlastfeder 72 - im dargestellten Ausführungsbeispiel wiederum in der Form einer Schraubendruckfeder - mittels der der Nehmerkolben 22 in seine in Fig. 1 etwas übertrieben weit links dargestellte Ruhestellung vorgespannt ist. Im Ergebnis sorgt die Vorlastfeder 72, deren Federkraft so gewählt ist, daß sie die Federkraft der Anpreßfedern 66 nicht zu überwinden vermag, über die Druckstange 52 und den Ausrückhebel 24 für eine dauernde leichte Anlage des Ausrücklagers 56 an den weiteren Ausrückelementen der Kupplung 12, so daß zwischen diesen Bauteilen kein Spiel vorhanden ist. Auch bewirkt die Vorlastfeder 72 somit ein ständiges Mitlaufen des Ausrücklagers 56 mit den sich drehenden Bauteilen der Kupplung 12, was den Verschleiß des Ausrücklagers 56 gegenüber einer Konstruktion, bei der das Ausrücklager beim Aus- bzw. Einrückvorgang der Kupplung beschleunigt bzw. abgebremst werden würde, stark vermindert.

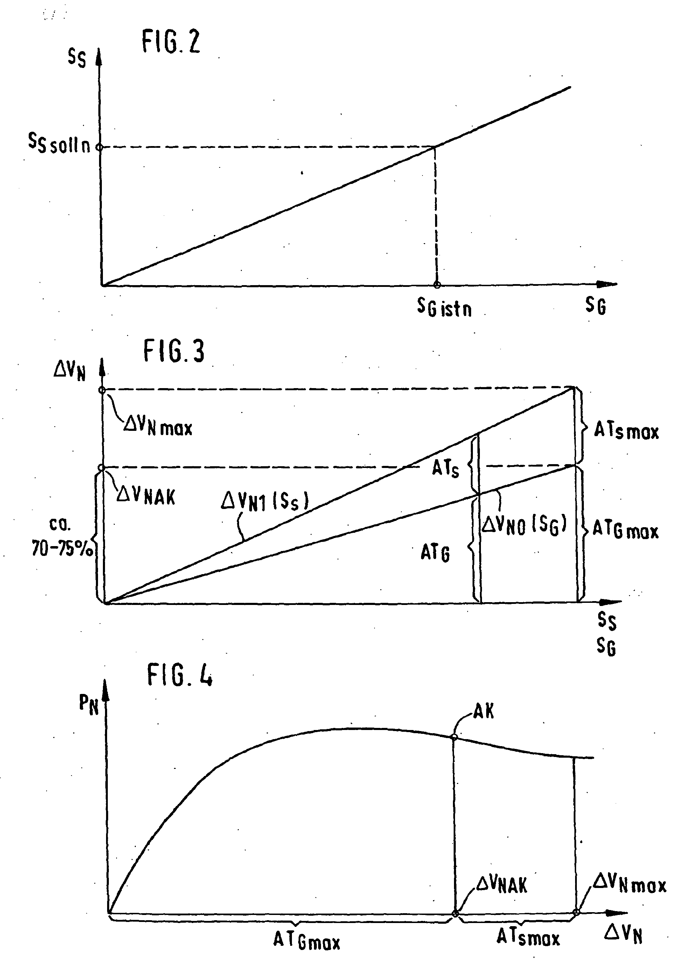

Es ist ersichtlich, daß infolge der einander entgegengerichteten Federkräfte der Vorlastfeder 72 und der Anpreßfedern 66 sowie der Hebelübersetzungen über den Ausrückhebel 24 und den Ausrückmechanismus 58 eine bestimmte, sich über den Hub bzw. Nehmerweg $S_N$ des Nehmerkolbens 22 ändernde Widerstandskraft, hier Nehmerkraft $F_N$ genannt, vorliegt, die es durch Druckbeaufschlagung des Druckraums 50 mit einem Nehmerdruck $p_N$ zu überwinden gilt, um den Nehmerkolben 22 in Fig. 1 nach links zu bewegen und somit die Kupplung 12 auszurücken, d.h. die Druckplatte 60 von der Kupplungsscheibe 70 und somit die Verbrennungskraftmaschine vom Getriebe (beides nicht gezeigt) zu trennen. Der Fig. 4 ist ein solcher typischer, der jeweiligen Kupplung 12 immanenter Verlauf des Nehmerdrucks $p_N$ (bzw. der Nehmerkraft $F_N$) - auch Kupplungskennlinie genannt - aufgetragen über der Volumenaufnahme $\Delta V_N$ des Nehmerzylinders 20 für die hydraulische Betätigungsvorrichtung 10 zu entnehmen.

Auch die Stelleinheit 26 hat ein Zylindergehäuse 74, in dem der Stellkolben 28 längsverschieblich und gegenüber der Innenumfangsfläche des Zylindergehäuses 74 mittels geeigneter, hier nicht dargestellter Dichtmittel abgedichtet geführt ist, so daß der Stellkolben 28 im Ausführungsbeispiel auf seiner in Fig. 1 linken Seite einen Druckraum 76 druckdicht und variabel begrenzt. In dem Druckraum 76 der Stelleinheit 26 ist eine Vorspannfeder 78 - im dargestellten Ausführungsbeispiel erneut in der Form einer Schraubendruckfeder - angeordnet, die den Stellkolben 28 in Fig. 1 nach rechts vorspannt.

Auf der in Fig. 1 rechten Seite des Stellkolbens 28 ist das Getriebe 30 auf nicht näher gezeigte Weise am oder im Zylindergehäuse 74 befestigt. Bei dem Getriebe 30 handelt es sich im dargestellten Ausführungsbeispiel um einen Spindeltrieb, genauer einen handelsüblichen, leichtgängigen Kugelgewindetrieb, mit einer Kugelrollspindel 80, der eine Spindelmutter 82 zugeordnet ist bzw. die in letzterer läuft. Während die Kugelrollspindel 80 auf in Fig. 1 nicht näher dargestellte Weise gegen ein Verdrehen gegenüber dem Zylindergehäuse 74 gesichert ist, kann die Spindelmutter 82 mittels des Elektromotors M drehend angetrieben werden. Bei dem Elektromotor M der Stelleinheit 26 handelt es sich bevorzugt um einen bürstenlosen Gleichstrommotor, der sich durch eine hervorragende Dynamik, einen hohen Wirkungsgrad bzw. eine hohe Leistungsdichte, einen geringen Verschleiß und damit eine lange Lebensdauer, eine gute Überlastfähigkeit, ein geringes Gewicht und nicht zuletzt eine geringe Geräuschentwicklung auszeichnet. Zu der Stelleinheit 26 ist schließlich strukturell noch anzumerken, daß die Vorspannfeder 78 im Druckraum 76 bestrebt ist, den Stellkolben 28 in Anlage an dem in Fig. 1 linken Ende der Kugelrollspindel 80 zu halten, welches nicht fest mit dem Stellkolben 28 verbunden ist.

Vermittels der Steuereinheit C kann über Stromleitungen 84 ein elektrischer Strom von vorbestimmter Stromstärke I und Spannung U an den Elektromotor M angelegt werden, was bewirkt, daß dieser die Spindelmutter 82 um einen definierten Drehwinkel in einer definierten Drehrichtung mit einem definierten Drehmoment verdreht. Die Drehbewegung der Spindelmutter 82 wird dabei in Abhängigkeit von der Spindelsteigung in eine translatorische Bewegung der Kugelrollspindel 80 transformiert, so daß das Getriebe 30 entsprechend der Drehwinkelstellung der Spindelmutter 82 über die Kugelrollspindel 80 einen Stellweg $S_S$ am Stellkolben 28 erzeugen kann. Außerdem wird das an der Spindelmutter 82 über den Elektromotor M aufgebrachte Drehmoment in Abhängigkeit von der Spindelsteigung in eine an der Kugelrollspindel 80 angreifende Stellkraft $F_S$ umgeformt, die bei Anlage des Stellkolbens 28 an der Kugelrollspindel 80 auch auf den Stellkolben 28 wirkt und einen hydraulischen Druck in dem Druckraum 76 der Stelleinheit 26 generieren kann.

Bei dem Ausführungsbeispiel der hydraulischen Betätigungsvorrichtung 10 sind der Geberzylinder 14, der Nehmerzylinder 20 und die Stelleinheit 26 gemäß Fig. 1 wie folgt miteinander verschaltet. Zunächst ist der Geberzylinder 14 mit dem Nehmerzylinder 20, genauer der Druckraum 34 des Geberzylinders 14 mit dem Druckraum 50 des Nehmerzylinders 20 mittels einer ersten Druckleitung 86 hydraulisch verbunden, in der die Flüssigkeitssäule zwischen dem Geberkolben 16 und dem Nehmerkolben 22 verschiebbar ist. Sodann ist die Stelleinheit 26, genauer deren Druckraum 76 zur Parallelschaltung von Geberkolben 16 und Stellkolben 28 über eine zweite Druckleitung 88 hydraulisch an die erste Druckleitung 86 angeschlossen. Im Ergebnis kann durch Verschiebung des Stellkolbens 28 über das mittels des Elektromotors M antreibbare Getriebe 30 das Volumen der Flüssigkeitssäule zwischen dem Geberkolben 16 und dem Nehmerkolben 22 definiert vergrößert werden. Infolgedessen ist es möglich, unter Beibehaltung eines herkömmlich dimensionierten Geberzylinders 14 den Nehmerzylinder 20 so zu vergrößern, daß der Nehmerkolben 22 eine größere hydraulische Wirkfläche aufweist, so daß im wesentlichen unter Beibehaltung des üblichen Druckniveaus in den Druckräumen 34, 50 des Geberzylinders 14 bzw. des Nehmerzylinders 20 und der Druckleitung 86 über die vergrößerte hydraulische Wirkfläche des Nehmerkolbens 22 eine größere Nehmerkraft $F_N$ aufgebracht werden kann, die es gestattet, Kupplungen 12 auszurücken, deren Anpreßfedern 66 zur Übertragung höherer Drehmomente durch die Kupplung 12 stärker als herkömmlich dimensioniert sind.

Wie des weiteren der Fig. 1 entnommen werden kann, ist am Geberzylinder 14 eine erste Sensoreinrichtung 90 vorgesehen, die über eine Signalleitung 92 an die Steuereinheit C angeschlossen, d.h. mit dieser signalverbunden ist. Ferner ist an der Stelleinheit 26 eine zweite Sensoreinrichtung 94 angeordnet, die ebenfalls über eine Signalleitung 96 mit der Steuereinheit C signalverbunden ist. Die erste Sensoreinrichtung 90 dient im Ausführungsbeispiel der Erfassung des Geberwegs $S_{Gist}$ als Führungsgröße für die Regelung des Elektromotors M über die Steuereinheit C und kann beispielsweise wie in der DE 203 15 735 U1 der Anmelderin beschrieben ausgebildet sein. Mittels der zweiten Sensoreinrichtung 94 ist der Stellweg $S_{Sist}$ des Stellkolbens 28 der Stelleinheit 26 als Regelgröße erfaßbar. Auch die zweite Sensoreinrichtung 94 kann prinzipiell wie in der DE 203 15 735 U1 der Anmelderin beschrieben ausgebildet sein. Wie in der Fig. 1 mit gestrichelten Linien am Nehmerzylinder 20 angedeutet, kann die zweite Sensoreinrichtung 94 alternativ auch der Erfassung des Nehmerwegs $S_N$ des Nehmerkolbens 22 im Nehmerzylinder 20 dienen. Bevorzugt ist jedoch die Anordnung der zweiten Sensoreinrichtung 94 an der Stelleinheit 26, weil diese somit als "add on"-Baugruppe schon (wenigstens) einen Teil der für die Regelung erforderlichen Sensorik mitbringen kann.

Wie nachfolgend anhand der Fig. 2 bis 4 noch näher erläutert werden soll, ist nun in der Steuereinheit C in Abhängigkeit von dem erfaßten Geberweg $S_{Gist}$ des Geberkolbens 16 ein Soll-Wert für den Stellweg $S_{Ssoll}$ des Stellkolbens 28 (bzw. den Nehmerweg $S_{Nsoll}$ des Nehmerkolbens 22) ermittelbar, worauf der ermittelte Stellweg $S_{Ssoll}$ des Stellkolbens 28 (bzw. Nehmerweg $S_{Nsoll}$ des Nehmerkolbens 22) über den von der Steuereinheit C wie oben beschrieben angesteuerten Elektromotor M der Stelleinheit 26 einregelbar ist.

Hierfür weist die Steuereinheit C ein Rechenglied R auf, mittels dessen der Soll-Wert für den Stellweg $S_{Ssoll}$ des Stellkolbens 28 (bzw. den Nehmerweg $S_{Nsoll}$ des Nehmerkolbens 22) nach folgender Beziehung ermittelbar ist:

$$S_{Ssoll} = k_U \star S_{Gist} \text{ (bzw. } S_{Nsoll} = k_U \star S_{Gist})$$

mit

$S_{Gist}$:    dem vermittels der ersten Sensoreinrichtung 90 erfaßten Geberweg des Geberkolbens 16 und
$k_U$:    einem in einem Speicherglied S der Steuereinheit C abgelegten Übersetzungsfaktor.

Ist der Übersetzungsfaktor $k_U$ konstant, was im Hinblick auf eine geringe Komplexität der Steuereinheit C bzw. der damit bewirkten Regelung von Vorteil ist, ergibt sich der Verlauf des Stellwegs $S_S$ aufgetragen über dem Geberweg $S_G$ gemäß Fig. 2 als Gerade. Über die Steuereinheit C wird, wie die Fig. 2 veranschaulicht, also einem bestimmten, mittels der ersten Sensoreinrichtung 90 erfaßten Geberweg $s_{Gistn}$ ein bestimmter Stellweg $S_{Ssolln}$ zugeordnet, den es durch geeignete Ansteuerung des Elektromotors M der Stelleinheit 26 einzuregeln gilt, so daß der mittels der zweiten Sensoreinrichtung 94 erfaßte Ist-Wert für den Stellweg $S_{Sist}$ mit dem jeweils vorgegebenen Soll-Wert für den Stellweg

$S_{Ssoll}$ übereinstimmt. Mit anderen Worten gesagt folgt der Stellkolben 28 der Stelleinheit 26 dem durch die Bedienperson vorgegebenen Hub bzw. Geberweg $S_G$ des Geberkolbens 16 in einer proportionalen Beziehung.

Mit zunehmendem Geberweg $S_G$ des Geberkolbens 16 wird also mehr Volumen an Hydraulikflüssigkeit durch die Stelleinheit 26 in die Flüssigkeitssäule zwischen Geberkolben 16 und Nehmerkolben 22 "eingeschoben". Dies veranschaulicht die Fig. 3, in der die Volumenaufnahme $\Delta V_N$ des Nehmerzylinders 20, also das ausgehend von der Ruhestellung des Nehmerzylinders 20 über dessen Druckanschluß in den Druckraum 50 des Nehmerzylinders 20 einströmende Volumen an Hydraulikflüssigkeit über dem Stellweg $S_s$ des Stellkolbens 28 bzw. dem Geberweg $S_G$ des Geberkolbens 16 aufgetragen ist. Die obere Linie $\Delta V_{N1}$ steht hierbei für die Volumenaufnahme $\Delta V_N$ des Nehmerzylinders 20, die sich bei einer Kupplungsbetätigung infolge der Volumenverdrängung aus den Druckräumen 34, 76 des Geberzylinders 14 und der Stelleinheit 26 ergibt, während die untere Linie $\Delta V_{N0}$ für die Volumenaufnahme $\Delta V_N$ des Nehmerzylinders 20 steht, die sich bei einer Kupplungsbetätigung alleine infolge der Volumenverdrängung aus dem Druckraum 34 des Geberzylinders 14 ergeben würde, wenn es z.B. zu einem Ausfall der Stelleinheit 26 käme. Es ist ersichtlich, daß sich die Volumenaufnahme $\Delta V_N$ des Nehmerzylinders 20 bei einer normalen Kupplungsbetätigung mittels der hydraulischen Betätigungsvorrichtung 10 quasi aus zwei Anteilen $AT_G$, $AT_S$ zusammensetzt, nämlich einem Anteil $AT_G$ infolge der Volumenverdrängung aus dem Druckraum 34 des Geberzylinders 14 und einem Anteil $AT_S$ infolge der parallelen Volumenverdrängung aus dem Druckraum 76 der Stelleinheit 26, wobei das Verhältnis der Anteile $AT_G : AT_S$ bei der Kupplungsbetätigung im wesentlichen konstant bleibt.

Durch Einschieben eines Volumens an Hydraulikflüssigkeit in den Druckraum 50 des Nehmerzylinders 20 wird der Nehmerkolben 22 in Fig. 1 nach links verschoben, so daß die Kupplung 12 über die Druckstange 52 und den Ausrückhebel 24 in an sich bekannter Weise ausgerückt wird. Die hierfür benötigte Nehmerkraft $F_N$ und damit der erforderliche, im Druckraum 50 des Nehmerzylinders 20 aufzubringende Nehmerdruck $p_N$ ändert sich, wie weiter oben bereits angesprochen, in Abhängigkeit von der Auslegung der jeweiligen Kupplung 12 mit dem Nehmerweg $S_N$ des Nehmerkolbens 22, der sich proportional zur Volumenaufnahme $\Delta V_N$ des Nehmerzylinders 20 verhält. Diese Kupplungskennlinie ($p_N = f(\Delta V_N)$) ist in Fig. 4 gezeigt.

Um ein "fail-safe"-Verhalten der hydraulischen Betätigungsvorrichtung 10 zu gewährleisten, d.h. sicherzustellen, daß die Kupplung 12 auch dann (gerade) noch ausgerückt werden kann, wenn die Stelleinheit 26 z.B. aufgrund eines Versagens der Elektrik ausgefallen ist, ist die hydraulische Betätigungsvorrichtung 10 im Hinblick auf das Verhältnis der Volumenanteile $AT_G : ATs$, die durch den Geberzylinder 14 bzw. die Stelleinheit 26 aufgebracht werden, vorzugsweise so ausgelegt, daß das mittels der Stelleinheit 26 maximal beisteuerbare Volumen $AT_{Smax}$ an Hydraulikflüssigkeit limitiert ist oder, mit anderen Worten gesagt, daß das aus dem Druckraum 34 des Geberzylinders 14 mittels des Geberkolbens 16 maximal verdrängbare Volumen $AT_{Gmax}$ (gerade) dazu ausreicht, einen solchen Hub bzw. Nehmerweg $S_N$ des Nehmerkolbens 22 zu bewirken, daß die Kupplung 12 bis zu ihrem sogenannten Auskuppelpunkt AK (siehe Fig. 4) oder bis wenigstens kurz davor ausgerückt wird. Kurz vor dem Auskuppelpunkt AK wird nur noch ein Bruchteil des maximal übertragbaren Drehmoments von der Kupplung 12 übertragen, so daß hier im Getriebe (nicht gezeigt) ein Gangwechsel schon möglich ist, wenn auch nur unter Ausübung einer gewissen Gewalt. Üblicherweise liegt der Auskuppelpunkt AK bei etwa 70 bis 75 % der maximalen Volumenaufnahme $\Delta V_{Nmax}$ des Nehmerzylinders 20, wie die Fig. 3 und 4 zeigen, so daß das Verhältnis der Volumenanteile $AT_G : AT_S$ vorzugsweise im Bereich von 70 : 30 bis 75 : 25 liegen sollte.

Bliebe zum Ausführungsbeispiel noch anzumerken, daß bei einem Verschleiß der Kupplung 12 ein Eingriff in die Ansteuerung der Stelleinheit 26 mittels der Steuereinheit C nicht notwendig ist. Bei einem Verschleiß der Kupplung 12 nimmt die Dicke der Reibbeläge an der Kupplungsscheibe 70 ab. Infolgedessen schieben die Anpreßfedern 66 das Ausrücklager 56 über den Ausrückmechanismus 58 nach links in Fig. 1. Dies führt dazu, daß der über den Ausrückhebel 24 und die Druckstange 52 gedrückte Nehmerkolben 22 in seiner Ruhestellung in Fig. 1 nach rechts wandert. Insofern nimmt das Gesamtruhevolumen der Flüssigkeitssäule zwischen Geberkolben 16 und Nehmerkolben 22 ab, wobei überschüssige Hydraulikflüssigkeit in der Grundstellung des Geberkolbens 16 über die Nachlaufleitung 38 in den Vorratsbehälter 40 gedrückt wird. Es ändert sich also lediglich das Gesamtruhevolumen der Flüssigkeitssäule, d.h. ein absoluter Volumenbetrag, was weder die Volumenverdrängung aus den Druckräumen 34, 76 des Geberzylinders 14 bzw. der Stelleinheit 26 noch die Volumenaufnahme durch den Druckraum 50 des Nehmerzylinders 20, d.h. die relativen Volumenänderungen bei einer Kupplungsbetätigung berührt. Allerdings steigt wie bei herkömmlichen hydraulischen Betätigungsvorrichtungen die für das Ausrücken der Kupplung 12 über das Kupplungspedal 18 aufzubringende Geberkraft $F_G$ mit zunehmendem Verschleiß der Kupplung 12 in Abhängigkeit von deren Bauart. Auch insofern ändert sich das Pedalgefühl gegenüber herkömmlichen hydraulischen Betätigungsvorrichtungen also nicht.

Für den Fachmann ist ersichtlich, daß grundsätzlich auch andere Sensoren als oben beschrieben und in den Figuren gezeigt eingesetzt werden können, ohne den Rahmen der Erfindung zu verlassen. So können z.B. anstelle der Hubwege $S_G$, $S_N$ bzw. $S_s$ der Kolben, d.h. der erwähnten Weggrößen auch dazu proportionale Größen erfaßt und geeignet ausgewertet werden, etwa (1) mittels eines Winkelwertgebers am Kupplungspedal 18 zur Erfassung der Winkelstellung des Kupplungspedals 18 bezüglich des Pedalbocks 44, die wiederum repräsentativ für den Geberweg $S_G$ ist, (2) mittels eines Winkelwertgebers am Ausrückhebel 24 zur Erfassung der Winkelstellung des Ausrückhebels 24 bezüglich des Umlenkbocks 54, die repräsentativ für den Nehmerweg $S_N$ ist, und/oder (3) mittels eines Drehstellungsgebers an der Spindelmutter 82 des Getriebes 30, aus dessen Signalen bei bekannter Steigung der Kugelrollspindel 80 auf den Stellweg $s_s$ des Stellkolbens 28 zurückgeschlossen werden kann.

Es wird eine hydraulische Betätigungsvorrichtung für eine Kraftfahrzeug-Reibkupplung offenbart, mit einem Geberzylinder, dessen Geberkolben über ein Betätigungsorgan mit einer Geberkraft beaufschlagbar und um einen Geberweg verschiebbar ist, und einem Nehmerzylinder, der einen mit dem Geberkolben über eine Flüssigkeitssäule hydraulisch in Reihe geschalteten, mit einem Ausrückorgan der Kraftfahrzeug-Reibkupplung wirkverbundenen Nehmerkolben aufweist. Ferner ist eine Stelleinheit vorgesehen, die einen zu dem Geberkolben hydraulisch parallel geschalteten Stellkolben hat, welcher über ein elektromotorisch antreibbares Getriebe kraftbeaufschlagbar und verschiebbar ist, sowie eine Steuereinheit, mittels der die Stelleinheit in Abhängigkeit von insbesondere dem Geberweg ansteuerbar ist, um durch Verschiebung des Stellkolbens das Volumen der Flüssigkeitssäule definiert zu erhöhen. Im Ergebnis wird eine einfache, kompakte Betätigungsvorrichtung geschaffen, mittels der auch kräftig dimensionierte Kupplungen betätigbar sind, ohne daß dies ein verglichen mit herkömmlichen Betätigungsvorrichtungen anderes Pedalgefühl bedingt.

BEZUGSZEICHENLISTE

| 10 | Betätigungsvorrichtung |
|----|----|
| 12 | Kupplung |
| 14 | Geberzylinder |
| 16 | Geberkolben |
| 18 | Kupplungspedal |
| 20 | Nehmerzylinder |
| 22 | Nehmerkolben |
| 24 | Ausrückhebel |
| 26 | Stelleinheit |
| 28 | Stellkolben |
| 30 | Getriebe |
| 32 | Zylindergehäuse |
| 34 | Druckraum |
| 36 | Rückstellfeder |
| 38 | Nachlaufleitung |
| 40 | Vorratsbehälter |
| 42 | Kolbenstange |
| 44 | Pedalbock |
| 46 | Druckplatte |
| 48 | Zylindergehäuse |
| 50 | Druckraum |
| 52 | Druckstange |
| 54 | Umlenkbock |
| 56 | Ausrücklager |
| 58 | Ausrückmechanismus |
| 60 | Druckplatte |
| 62 | Schwungrad |
| 64 | Kurbelwelle |
| 66 | Anpreßfeder |
| 68 | Getriebeeingangswelle |
| 70 | Kupplungsscheibe |
| 72 | Vorlastfeder |
| 74 | Zylindergehäuse |
| 76 | Druckraum |
| 78 | Vorspannfeder |
| 80 | Kugelrollspindel |
| 82 | Spindelmutter |
| 84 | Stromleitung |
| 86 | Druckleitung |
| 88 | Druckleitung |

90    erste Sensoreinrichtung
92    Signalleitung
94    zweite Sensoreinrichtung
96    Signalleitung

C     Steuereinheit
M     Elektromotor
R     Rechenglied
S     Speicherglied

$A_G$    hydraulische Wirkfläche des Geberkolbens
AN     hydraulische Wirkfläche des Nehmerkolbens
$A_S$    hydraulische Wirkfläche des Stellkolbens
AK     Auskuppelpunkt
$AT_G$   Anteil des durch den Geberzylinder beigesteuerten Volumens
$AT_S$   Anteil des durch die Stelleinheit beigesteuerten Volumens
$F_G$    Geberkraft
$F_N$    Nehmerkraft
Fs     Stellkraft
$k_U$    Übersetzungsfaktor
$p_G$    Geberdruck
$p_N$    Nehmerdruck
$S_G$    Geberweg
$S_N$    Nehmerweg
$S_s$    Stellweg
$\Delta V_N$    Volumenaufnahme des Nehmerzylinders


## Patentansprüche

1.  Hydraulische Betätigungsvorrichtung (10) für eine Kraftfahrzeug-Reibkupplung (12), mit
    einem Geberzylinder (14), dessen Geberkolben (16) über ein Betätigungsorgan (18) als Gebergrößen mit einer Geberkraft ($F_G$) beaufschlagbar und um einen Geberweg ($S_G$) verschiebbar ist,
    einem Nehmerzylinder (20), der einen mit dem Geberkolben (16) über eine Flüssigkeitssäule hydraulisch in Reihe geschalteten Nehmerkolben (22) aufweist, welcher mit einem Ausrückorgan (24) der Kraftfahrzeug-Reibkupplung (12) wirkverbunden ist, wobei der Geberzylinder (14) mit dem Nehmerzylinder (20) mittels einer ersten Druckleitung (86) hydraulisch verbunden ist, in der die Flüssigkeitssäule zwischen dem Geberkolben (16) und dem Nehmerkolben (22) verschiebbar ist,
    einer Stelleinheit (26), die einen zu dem Geberkolben (16) hydraulisch parallel geschalteten Stellkolben (28) hat, welcher über ein mittels eines Elektromotors (M) antreibbares Getriebe (30) kraftbeaufschlagbar und verschiebbar ist, wobei die Stelleinheit (26) zur Parallelschaltung von Geberkolben (16) und Stellkolben (28) über eine zweite Druckleitung (88) hydraulisch an die erste Druckleitung (86) angeschlossen ist,
    einer Steuereinheit (C), mittels der der Elektromotor (M) ansteuerbar ist, so daß durch Verschiebung des Stellkolbens (28) über das Getriebe (30) das Volumen der Flüssigkeitssäule zwischen dem Geberkolben (16) und dem Nehmerkolben (22) definiert vergrößerbar ist,
    einer mit der Steuereinheit (C) signalverbundenen ersten Sensoreinrichtung (90), mittels der der Geberweg ($S_{Gist}$) als Führungsgröße erfaßbar ist, und
    einer mit der Steuereinheit (C) signalverbundenen zweiten Sensoreinrichtung (94), mittels der ein Stellweg ($S_{Sist}$) des Stellkolbens (28) oder ein Nehmerweg ($S_{Nist}$) des Nehmerkolbens (22) als Regelgröße erfaßbar ist,
    wobei die Steuereinheit (C) ein Rechenglied (R) aufweist, mittels dessen ein Soll-Wert für den Stellweg ($S_{Ssoll}$) bzw. den Nehmerweg ($S_{Nsoll}$) nach folgender Beziehung ermittelbar ist:

$$S_{Ssoll} = k_U * S_{Gist} \text{ bzw. } S_{Nsoll} = k_U * S_{Gist}$$

mit

$S_{Gist}$: dem vermittels der ersten Sensoreinrichtung (90) erfaßten Geberweg des Geberkolbens (16) und

$k_U$: einem in einem Speicherglied (S) der Steuerein- heit (C) abgelegten übersetzungsfaktor, und

wobei der ermittelte Stellweg ($S_{Ssoll}$) oder Nehmerweg ($S_{Nsoll}$) über den von der Steuereinheit (C) angesteuerten Elektromotor (M) der Stelleinheit (26) einregelbar ist.

2. Betätigungsvorrichtung (10) nach Anspruch 1, wobei der übersetzungsfaktor ($k_U$) konstant ist.

3. Betätigungsvorrichtung (10) nach Anspruch 1 oder 2, wobei der Geberkolben (16) mittels einer Rückstellfeder (36) in eine Grundstellung vorgespannt ist, in der der Druckraum (34) des Geberzylinders (14) mit einem Vorratsbehälter (40) hydraulisch verbunden ist.

4. Betätigungsvorrichtung (10) nach einem der vorhergehenden Ansprüche, wobei es sich bei dem Getriebe (30) der Stelleinheit (26) um einen Spindeltrieb handelt.

5. Betätigungsvorrichtung (10) nach einem der vorhergehenden Ansprüche, wobei es sich bei dem Elektromotor (M) der Stelleinheit (26) um einen bürstenlosen Gleichstrommotor handelt.

**Claims**

1. Hydraulic actuating device (10) for an automotive friction clutch (12), with
a master cylinder (14), the master piston (16) of which can be impinged upon with a master force ($F_G$) and can be displaced by a master travel ($S_G$) as master variables via an actuating member (18),
a slave cylinder (20) comprising a slave piston (22) which is hydraulically connected in series to the master piston (16) via a liquid column, and which is functionally linked with a clutch-release member (24) of the automotive friction clutch (12), wherein the master cylinder (14) is hydraulically connected to the slave cylinder (20) by a first pressure line (86), in which the liquid column between the master piston (16) and the slave piston (22) is displaceable,
an adjusting unit (26) comprising an adjusting piston (28) hydraulically connected parallel to the master piston (16), which can be impinged upon with a force and displaced via a transmission (30) that can be driven by an electric motor (M), wherein, for parallel connection of the master piston (16) and the adjusting piston (28), the adjusting unit (26) is hydraulically connected via a second pressure line (88) to the first pressure line (86),
a control unit (C), by means of which the electric motor (M) can be controlled, so that by displacement of the adjusting piston (28) via the transmission (30) the volume of the liquid column between the master piston (16) and the slave piston (22) can be increased in a defined manner,
a first sensor device (90) with a signal connection to the control unit (C), by means of which the master travel ($S_{Gist}$) can be detected as a reference value, and
a second sensor device (94) with a signal connection to the control unit (C), by means of which an adjusting travel ($S_{Sist}$) of the adjusting piston (28) or a slave travel ($S_{Nist}$) of the slave piston (22) can be detected as a control variable,
wherein the control unit (C) comprises a computation element (R), by means of which a desired value for the adjusting travel ($S_{Ssoll}$) or the slave travel ($S_{Nsoll}$) can be determined according to the following relationship:

$$S_{Ssoll} = k_U \star S_{Gist} \quad \text{or} \quad S_{Nsoll} = k_U \star S_{Gist}$$

where

$S_{Gist}$ is the master travel of the master piston (16) detected by the first sensor device (90) and
$k_U$ is a transformation factor stored in a storage element (S) of the control unit (C), and

wherein the adjusting travel ($S_{Ssoll}$) or slave travel ($S_{Nsoll}$) determined can be adjusted via the electric motor (M) of the adjusting unit (26) which is controlled by the control unit (C).

2. Actuating device (10) according to claim 1, wherein the transformation factor ($k_U$) is constant.

3. Actuating device (10) according to claim 1 or 2, wherein the master piston (16) is pretensioned in a basic position by a return spring (36), in which position the pressure chamber (34) of the master cylinder (14) is hydraulically connected to a reservoir (40).

**4.** Actuating device (10) according to any one of the preceding claims, wherein the transmission (30) of the adjusting unit (26) is a spindle drive.

**5.** Actuating device (10) according to any one of the preceding claims, wherein the electric motor (M) of the adjusting unit (26) is a brushless DC motor.

**Revendications**

**1.** Dispositif d'actionnement hydraulique (10) pour un embrayage à friction (12) de véhicule automobile, comportant un cylindre émetteur (14) dont le piston émetteur (16) peut être sollicité via un organe d'actionnement (18) à titre de grandeur d'émission avec une force d'émission ($F_G$) et déplacé d'une course d'émission ($S_G$), un cylindre récepteur (20) qui présente un piston récepteur (22) branché hydrauliquement en série avec le piston émetteur (16), qui est activement relié à un organe de débrayage (24) de l'embrayage à friction (12) de véhicule automobile, le cylindre émetteur (14) étant relié hydrauliquement au cylindre récepteur (20) au moyen d'une première conduite sous pression (86) dans laquelle la colonne de liquide peut être déplacée entre le piston émetteur (16) et le piston récepteur (22), une unité de positionnement (26) qui possède un piston de positionnement (28) branché hydrauliquement en parallèle avec le piston émetteur (16), qui peut être sollicité en force et déplacé via un mécanisme (30) susceptible d'être entraîné par un moteur électrique (M), l'unité de positionnement (26) étant raccordée hydrauliquement à la première conduite sous pression (86) via une deuxième conduite sous pression pour le branchement en parallèle du piston émetteur (16) et du piston de positionnement (28), une unité de commande (C) au moyen de laquelle le moteur électrique (M) peut être piloté de telle sorte que par déplacement du piston de positionnement (28) via le mécanisme (30), le volume de la colonne de liquide entre le piston émetteur (16) et le piston récepteur (22) peut être augmentée de manière définie, un premier dispositif capteur (90) relié par signal à l'unité de commande (C), au moyen duquel la course d'émission ($S_{Gist}$) peut être détectée à titre de grandeur pilote, un deuxième dispositif capteur (94) relié par signal à l'unité de commande (C), au moyen duquel une course de positionnement ($S_{Sist}$) du piston de positionnement (28) ou une course de réception ($S_{Nist}$) du piston récepteur (22) peut être détectée à titre de grandeur de régulation, étant entendu que l'unité de commande (C) comprend un circuit de calcul (R) au moyen duquel il est possible de déterminer une valeur de consigne pour la course de positionnement ($S_{Ssoll}$) ou la course de réception ($S_{Nsoll}$) d'après l'équation suivante :

$$S_{Ssoll} = k_v * S_{Gist} \quad \text{ou} \quad S_{Nsoll} = k_v * S_{Gist}$$

dans laquelle
$S_{Gist}$ est la course d'émission du piston émetteur (16), détectée au moyen du premier dispositif capteur (90), et $k_v$ est un facteur de conversion mémorisé dans un élément de mémoire (S) de l'unité de commande (C), et dans lequel la course de positionnement déterminée ($S_{Ssoll}$) ou la course de réception ($S_{Nsoll}$) est susceptible d'être régulée via le moteur électrique (M) de l'unité de positionnement (26), piloté par l'unité de commande (C).

**2.** Dispositif d'actionnement (10) selon la revendication 1, dans lequel le facteur de conversion ($k_v$) est constant.

**3.** Dispositif d'actionnement (10) selon la revendication 1 ou 2, dans lequel le piston émetteur (16) est précontraint au moyen d'un ressort de rappel (36) vers une position de base dans laquelle la chambre à pression (34) du cylindre émetteur (14) est reliée hydrauliquement à un réservoir (40).

**4.** Dispositif d'actionnement (10) selon l'une des revendications précédentes, dans lequel le mécanisme (30) de l'unité de positionnement (26) est un entraînement à broche.

**5.** Dispositif d'actionnement (10) selon l'une des revendications précédentes, dans lequel le moteur électrique (M) de l'unité de positionnement (26) est un moteur à courant continu sans balais.

FIG.1

## FIG. 2

## FIG. 3

## FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4918921 A
- US 5002166 A
- US 5094079 A
- DE 10222730 A1
- DE 20315735 U1

**In der Beschreibung aufgeführte Nicht-Patentliteratur**

- Handbuch der hydraulischen Bremsanlage und Kupplungsbetätigung. 1998, 261